(19) Europäisches Patentamt
European Patent Office
Office européen des brevets

(11) Publication number: 0 103 922 B1

(12) **EUROPEAN PATENT SPECIFICATION**

(45) Date of publication of patent specification: 13.07.88

(51) Int. Cl.$^4$: C 08 L 69/00

(21) Application number: 83201215.7

(22) Date of filing: 22.08.83

(54) **Self-extinguishing polycarbonate composition.**

(30) Priority: 25.08.82 IT 2296482
25.08.82 IT 2296582
25.08.82 IT 2296882
26.08.82 IT 2298782
03.05.83 IT 2090383

(43) Date of publication of application:
28.03.84 Bulletin 84/13

(45) Publication of the grant of the patent:
13.07.88 Bulletin 88/28

(84) Designated Contracting States:
AT BE CH DE FR GB LI LU NL SE

(56) References cited:
EP-A-0 024 331
EP-A-0 042 561
GB-A-2 019 422

The file contains technical information submitted after the application was filed and not included in this specification

(73) Proprietor: ENICHEM TECNORESINE S.p.A.
Via Ruggero Settimo 55
I-90139 Palermo (IT)

(72) Inventor: Dozzi, Giovanni
Corso Lodi 82
I-20139 Milan (IT)
Inventor: Della Fortuna, Giorgio
Via delle Ande 5
I-20151 Milan (IT)
Inventor: Cucinella, Salvatore
Via Kennedy 12
I-20097 S. Donato Milanese(Milan) (IT)

(74) Representative: Roggero, Sergio et al
Ing. Barzanò & Zanardo Milano S.p.A. Via Borgonuovo 10
I-20121 Milano (IT)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

EP 0 103 922 B1

Courier Press, Leamington Spa, England.

**Description**

Several procedures are known in the literature for imparting self-extinguishing properties to polycarbonates. However, many of such methods have proven poorly satisfactory in that they induce detrimental effects towards the other properties of the polymer concerned. For example, the self-extinguishing property of polycarbonates can be improved when using, as additives and at comparatively high levels, halogenated organic compounds, synergistically, or not, with antimony oxide (J. T. Howarth et al., Plastics World, 64—74, March 1973). It has been found, in any case, that the adoption of such-like additives involves an intolerable degradation of the polycarbonates during the processing operations (U.S. 3,334,154), which is then followed by a deterioration of the most important physical properties of the polymer concerned (U.S. 4,153,595).

It has also been suggested to use tetra-halogenated derivatives of bisphenol A as comonomers in the copolymerization, with bisphenol A, to produce a polycarbonate which, as such, or admixed with a halogen-free polycarbonate, produces materials having an improved resistance to the flame. It has also been reported, in such a case, that, in order that a satisfactory resistance to the flame may be achieved, such polymeric materials should contain rather high amounts of halogen values (U.S. 4,046,836, U.S. 3,775,367 and U.S. 4,100,130) but this practice involves: 1) a pronounced worsening of the behavior in processing so that the mechanical properties never attain the level which is typical for the halogen-free polycarbonates; 2) evolution of halogen or a halide acid under the normal processing conditions, the result being corrosion of the machinery, and 3) evolution, under the combustion conditions, of large amounts of halogen-containing degradation products and, more particularly, of halide acids which are responsible for additional corrosion damages of the metallic structures.

More updated expedients are also known, according to which the self-extinguishing properties of polycarbonates are enhanced by the addition of small amounts of quite particular organic compounds, such as the salts of alkali metals, or alkaline earth metals, or aryl- or alkylsulphonic acids or their derivatives (for example, U.S. 3,940,366 — U.S. 3,933,734 — U.S. 4,104,253 — U.S. 4,153,195 — U.S. 4,214,062). The assessment of the flame-retarding activity of such particular compounds has been the outcome of an intensive experimental work which was directed to a number of classes of organic compounds, whereby, inter alia, the inadequacy of the use of carboxylic acids as flame retarders had been detected, due to undesirable side-effects which had been induced, especially on the stability of the resin at the processing temperatures (V. Mark, Organic Coatings and Plastics Chemistry, Vol. 43, Preprints of papers presented at the 2nd Chem. Congress of North American Continent, 1980, August 24—29, S. Francisco, page 71).

Thus, monocarboxylic aliphatic acids, when added to halogen-free polycarbonates, impart to such polymers very poor flameproof properties.

Another approach is represented by EP—A—0 042 561 (Bayer), which shows a self-extinguishing polycarbonate composition consisting of a polycarbonate base, a salt of ammonium or of an alkali metal of an organic or inorganic acid, very broadly defined, and a phthalimide, plus polytetrafluoroethylene. In this latter connection, it should be noticed that polytetrafluoroethylene is an intrinsically flame-proof material, so that its contribution to the self-extinguishing properties of the final composition cannot be ignored completely.

Another attempt to solve the problem in question is GB—A—2 019 422 (General Electric), which discloses a self-extinguishing polycarbonate composition consisting of an aromatic polycarbonate base, a salt of an alkali- or an alkaline earth metal of sulphonated organic acid, plus a nucleating agent.

To complete the review of the prior art, EP—A—0 024 331 (Bayer) suggests to admix aqueous solutions of flame-retarding agents in general with non-polar-solvent solutions of the polymer concerned. The procedure is cumbersome and expensive and is certainly more intricate than merely adding the flame-retarding additive concerned to the polymer compound.

A previous application by the same Applicants, EP—A—83200782.7 (publ. No. 0 096 444) discloses metal salts of a metal of Groups IA, IB, IIA, or IIB of the Periodic Table of the Elements of a carboxylic acid having the general formula:

$$(HOOC)_m—(A_1)_{s_1}—(X)_i—(A_2)_{s_2}—(COOH)_n$$

with $A_1$ and $A_2$ equal or different being phenyl, pyridyl, cyclohexyl, or aliphatic radicals, m and n, equal or different, being integers from 0 to 5, either of them being other than zero, both being at least 1 when $A_1$ and $A_2$ are aliphatic radicals, $s_1$ and $s_2$, equal or different being integers from 0 to 5, either of them being other than zero, i being either 0 or 1, and X being either $—SO_2—$ or $=(CO)_2N—$, as valuable additives adapted to impart to a polycarbonate resin base appreciable flame-retarding properties. Reference is invited to the Applicants' own previous application aforementioned EP—A—0 096 444 for further details.

It has been found, during progress of further experimental work and field tests, that the action of the flame-retarding additives disclosed in the previous application mentioned above can be enhanced and improved by combining additives of the type disclosed in the EP—A—0 096 444 with certain useful adjuvants.

More particularly, the present invention provides:

A self-extinguishing, halogen-free polycarbonate composition consisting of a polycarbonate resin base and of

(A) at least one salt of carboxylic organic compounds having the general formula (I), or mixtures thereof, said salt being a salt of a metal belonging to the Groups IA, IB, IIA or IIB of the Periodic Table of the Elements, and/or of ammonium:

$$(HOOC)_m—(A_1)_{s_1}—(X)_i—(A_2)_{s_2}—(COOH)_n \qquad (I)$$

wherein:

$A_1$ and $A_2$, equal or different, are phenyl, pyridyl, cyclohexyl, or an aliphatic radical;

*m* and *n*, equal or different, are integers from 0 to 5, either of them being other than zero, both being at least 1 when $A_1$ and $A_2$ are aliphatic radicals;

$s_1$ *and* $s_2$, equal or different, are integers from 0 to 5, either of them being other than zero;

*i* is either zero or 1;

*X* being, when the compound of formula (I) is a metal salt a diradical or a pluriradical selected from among $—SO_2$,

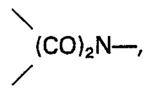

=N—R—N=, wherein R is a straight-lined or a branched aliphatic radical,

*X* being, when the compound of formula (I) is an ammonium salt, a biradical or a pluriradical which can be =N—R—N=, R being as defined above, plus

(B) at least one of the following components:

1) a halogen-substituted organic ether obtained by etherifying mono- or polyfunctional, totally or partially halogen-substituted alcohols or phenols;

2) an optionally halogen-substituted imide;

3) an optionally halogen-substituted organic sulfone;

4) an inorganic adjuvant selected from among the halides of alkali- or alkaline earth metals, the oxides of metals of the Groups IB, VIB, VIIB, IIIA, IVA, VIII and lanthanides, carbon black, and the pyrolysis residues of any compound of the general formula (I) above.

According to a particular aspect of the present invention, the component (B) is a halogen-substituted organic ether obtained by etherifying mono- and polyfunctional, at least partially substituted alcohols or phenols, having the general formula:

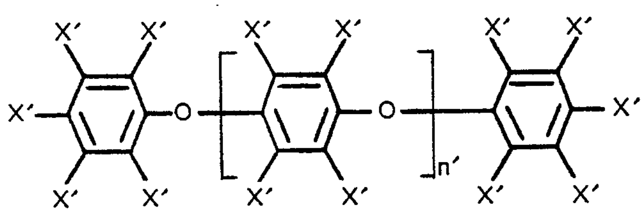

(II)

wherein *n'* is comprised betwee 0 and $10^4$ and the substituent X' is selected from among hydrogen, fluorine, chlorine and bromine, with the proviso that at least one halogen atom is present in at least one aromatic ring.

According to another aspect of the invention, the component (B) is a halogen-substituted organic ether obtained by etherifying mono- and polyfunctional, at least partially substituted alcohols or phenols, having the general formula:

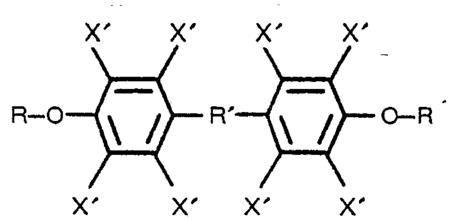

(III)

wherein *X'* has the same meaning as defined in claim 2 and with the same proviso, and *R* and *R'*, equal to, or different from one another, are optionally halogen-substituted alkyl or cycloalkyl radicals.

According to a further aspect of the invention, the component (B) is an optionally halogen substituted imide selected from among the imides having the general formulae:

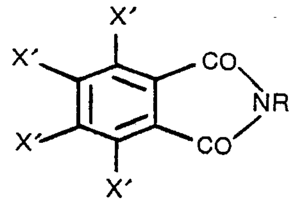

(IV)

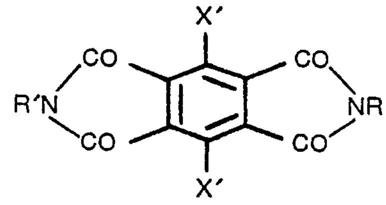

(V)

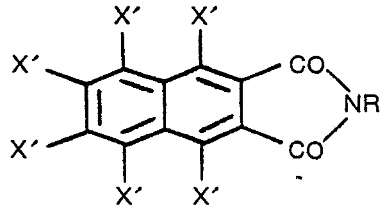

(VI)

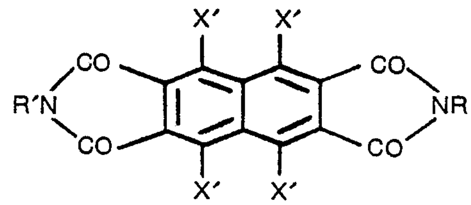

(VII)

wherein *R* and *R'*, equal to, or different from one another, are alkyl, aryl or cycloalkyl radicals and *X'* is selected from among hydrogen, fluorine, chlorine and bromine.

According to yet another aspect of the invention, the component (B) is a monomeric or polymeric aromatic sulfone, or a derivative thereof, or a mixture thereof, in which the $—SO_2—$ on one side to an aromatic radical and, on the other side, to at least another optionally substituted aliphatic, aromatic, cycloaliphatic or heterocyclic radical, the substituents being halogens, ether or ester groups, ketone groups, nitrile groups, carbonate groups, amide groups, amine groups and imide groups.

A prominent advantage of the invention, in addition to the synergistic action of component (B) relative to component (A) is that the quantities to be used of both components are comparatively small, and this is an economical asset.

Thus, for component (A) no more than 3 parts by weight per hundred parts of resin (phr) are recommended, and the most common quantity does not exceed 0,5 phr.

The same, more or less, is true of component (B): not more than 3 phr are sufficient and, in the majority of the cases, 0,8 phr are more than sufficient.

Preferred embodiments of the salts of the organic carboxylic compounds corresponding to the general formula (I) are the following:

the sodium salt of the pyridine-3-carboxylic acid
the potassium salt of the phenyl-1,3,5-tricarboxylic acid
the potassium salt of the phenyl-1,4-bicarboxylic acid
the potassium salt of the biphenyl-2,2'-bicarboxylic acid
the sodium salt of the pyridine-3,5-bicarboxylic acid
the calcium salt of the pyridine-2,6-bicarboxylic acid
the potassium salt of the pyridine-2,6-bicarboxylic acid
the sodium salt of the pyridine-2,6-bicarboxylic acid
the sodium salt of the ethylenediaminotetraacetic acid
the potassium salt of ethylenediamino tetraacetic acid
the ammonium salt of the N,N'-(bis-paracarboxybenzoyl)-1,6-diaminohexanoic acid
the potassium salt of the pyridine-3,5-bicarboxylic acid
the sodium and ammonium salt of the ethylenediaminotetraacetic acid
the potassium salt of the trans-cyclohexane-1,4-bicarboxylic acid
the potassium salt of the biphenylsulfone-4,4'-bicarboxylic acid
the sodium salt of the N-cyclohexyl-4-carboxyphthalimide
the sodium salt of the biphenylsulfone-4,4'-bicarboxylic acid
the sodium salt of the 4-benzenesulfonebenzoic acid
the zinc salt of the biphenylsulfone-4,4'-bicarboxylic acid
the magnesium salts of the biphenylsulfone-4,4'-bicarboxylic acid
the lithium salt of the biphenylsulfone-4,4'-bicarboxylic acid
the potassium salt of the N-cyclohexyl-4-carboxyphthalimine.

The adjuvants are members selected from the group consisting of:
iron oxide
octabromobiphenyloxide
residue of the pyrolysis of the potassium salt of the biphenylsulfone-4,4'-bicarboxylic acid
Cuprous oxide

Cobalt oxide
Silicon dioxide
Neodymium oxide
Manganese oxide
Potassium chloride
Boron trioxide
Decabromobiphenyloxide
Potassium bromide
Brominated Polyphenyleneoxide
2,2,2-trifluoro-ethyl ester of the biphenylsulfone-4,4'-bicarboxylic acid
Biphenyl-4,4'-bitolylsulfone
N-cyclohexyltetrachlorophthalimide
N,N'-bicyclohexylimide of the pyromellitic acid
Carbon black
Tetrabromobisphenol A-bis
(2,3-dibromopropylether)
Tetrabromobisphenol A-bis
(2-hydroxyethyl ether)-bis acrylate
Chromic oxide
Biphenyl-4,4'-biphenylsulfone
Biphenylcarbonate-4,4'-biphenylsulfone.

The adjuvants can be used individually and/or in admixture with other adjuvants of the same class and/or belonging to different classes as defined above.

The salts of the metals of the groups IA, IB, IIA, IIB of the Periodic Table and ammonium salts of orgnic carboxylic compounds of general formula (I) are used individually or in admixture with each other in a quantity which is equal to or lower than totally, 3 phr and preferably in an amount equal to or lower than 0.5 phr, (part of the additive per hundred part of resin).

The adjuvants and their admixtures are used in an amount equal to or lower than 3 phr and preferably in an amount equal to or lower than 0.8 phr.

Such addition is profitable with any kind of aromatic polycarbonate having an average viscometric molecular weight between 10,000 and 100,000 and preferably between 20,000 and 50,000 and, more particularly, those polycarbonates which are prepared by reacting an aromatic diol, such as bisphenol A [2,2-bis(4-hydroxyphenyl)propane] with a precursor of the carbonate group.

The preparation of the polycarbonate with the interfacial polycondensation procedure is usually carried out in the presence of a molecular-weight-regulator, of an acid acceptor and a catalyst. The carbonate group precursor as generally used is carbonyl chloride, but other halides can also be employed, halogen formates or esters of the carbonic acid for processes carried out with no solvent being present.

As the bisphenol, in addition to bisphenol-A, there can be used:

Bis-(4-hydroxyphenyl)-alkanes such as bis-(4-hydroxyphenyl)-methane, 2,2-(4-hydroxy-3-methylphenyl)-propane, hydroquinone, resorcinol, bis-(4-hydroxyphenyl)-p-diisopropylbenzene.

Aromatic polyfunctional compounds having at least three functional groups can be used for producing branched polycarbonates.

It is quite possible to employ two or more bisphenols.

The different products which are the subject matter of this invention can be used as flame-retarders not only in straight-line polycarbonates, but also in branched polycarbonates, their mixtures or polymeric alloys which contain also polycarbonates. In addition, the polycarbonate may contain also other additives, such as pigments, stabilizers against heat and oxygen, lubricants, dyestuffs, fillers, UV-absorbers and others.

All the operational details will become apparent from the scrutiny of the examples to follow which are intended for illustrating the invention only, without limiting the scope thereof.

## Examples 8—109

100 parts of aromatic polycarbonate which has been prepared by recting bisphenol-A with phosgene, are admixed with the additives and the adjuvants enumerated in Table 1. The blend of additives and adjuvants, which had previously been homogenized by milling in a Retsch mill, and of polycarbonate, is introduced in an extruder heated to about 260°C and the extrudate is then cooled and granulated.

The granules have been both copression molded (285°C, 40 kg/cm$^2$) and injection molded (at about 300°C) to prepare test samples of different kinds. Sample A (127 × 12.7 × 3.2 – 1.6 mm), Sample B (127 × 6.5 × 3.2 mm) and Sample C (65 × 55 × 3.2 mm), the dimensions of the samples being approximate.

The Samples A, five for each formulation reported in Table 1, are subjected to the flammability test for the classification of materials according to the Standards UL—94 by Underwriters' Laboratories.

According to such test procedures, the materials are classified, respectively, as V—0, V—1 and V—2 on the basis of the results for the five samples and according to the following rules:

94 V—0 no sample must have a combustion time longer than 10 seconds after that the Bunsen flame has been withdrawn. The overall combustion time for the five samples (ten ignitions) must not exceed 50 seconds. No sample must allow burning particles to drop and inflame the surgical cotton pad placed vertically beneath the sample at the distance of 305 mm therefrom.

94 V—1 no sample must have a combustion time longer than 30 seconds after the withdrawal of the Bunsen flame. The total combination time for the five samples (ten ignitions) must not exceed 250 seconds. No sample must allow burining particles to drop and inflame the surgical cotton pad placed vertically beneath the sample at a distance of 305 mm therefrom.

94 V—2 no sample must have a combustion time longer than 30 seconds after withdrawal of the Bunsen flame. The total combustion time for the five samples (ten ignitions) must not exceed 250 seconds. The samples are permitted to allow burning particles to drop and inflame the surgical cotton pad placed vertically beneath the sample at a distance of 305 mm therefrom.

Moreover, all the five samples must pass the UL—94 test, otherwise they are classified on the basis of the behaviour of the worst sample.

For example, if a sample has a behavior V—2 and the remaining four samples are V—O all the five samples are classified V—2.

If a sample continues to burn for more than 30 seconds after the withdrawal of the Bunsen flame, it cannot be classified on the basis of the UL—94 test but is indicated, in the present invention, as a polymer which burns. The samples B are subjected to the fire-resistance test according to ASTM D 2863—77 which establishes a correlation between the flammability of a polymeric material and the concentration of oxygen existing in the atmosphere in which the sample is being tested. This correlation is expressed in terms of LOI (Limiting Oxygen Index), that is to say, the minimum percentage of oxygen which is capable of supporting the combustion in a nitrogen-oxygen atmosphere impinging the sample concerned from bottom upwards. The samples C have been used for light-transmission tests using an XL211 Gardner machine. In order that the invention may better be illustrated, Table 1 reports the results of readings taken on the polycarbonate as such adopted as a reference sample, and on the polycarbonate after the addition thereto of the salts of the organic carboxylic compound in union with the adjuvant according to the present invention.

Table 2 reports a technological evaluation of the polycarbonate as such, expressed as a reference sample, and of a few samples of polycarbonate to which the salts of the organic carboxylic compounds and the adjuvants enumerated in Table 1 had been added.

TABLE 1

| Example | Additive (phr) |
|---|---|
| R | Reference sample (polycarbonate with no additives) |
| 8 | Sodium salt of the pyridine-3-carboxylic acid (0.06) |
| 9 | Sodium salt of the pyridine-3-carboxylic acid (0.06) |
| 10 | Potassium salt of the phenyl-1,3,5-tricarboxylic acid (0.05) |
| 11 | Potassium salt of the phenyl-1,3,5-tricarboxylic acid (0.05) |
| 12 | Potassium salt of the phenyl-1,4-bicarboxylic acid (0.07) |
| 13 | — |
| 14 | Potassium salt of the phenyl-1,4-bicarboxylic acid (0.07) |
| 15 | Potassium salt of the biphenyl-2,2′-bicarboxylic acid (0.035) |
| 16 | Potassium salt of the biphenyl-2,2′-bicarboxylic acid (0.035) |
| 17 | — |
| 18 | Potassium salt of the biphenyl-2,2′-bicarboxylic acid (0.035) |
| 19 | — |
| 20 | Potassium salt of the biphenyl-2,2′-bicarboxylic acid (0.035) |

TABLE 1 (continued)

| Example | Additive (phr) |
|---|---|
| 21 | Sodium salt of the pyridine-3,5-bicarboxylic acid (0.04) |
| 22 | — |
| 23 | Sodium salt of the pyridine-3,5-bicarboxylic acid (0.04) |
| 24 | — |
| 25 | Sodium salt of the pyridine-3,5-bicarboxylic acid (0.04) |
| 26 | Sodium salt of the pyridine-3,5-bicarboxylic acid (0.04) |
| 27 | Sodium salt of the pyridine-3,5-bicarboxylic acid (0.07) |
| 28 | — |
| 29 | Sodium salt of the pyridine-3,5-bicarboxylic acid (0.04) |
| 30 | Sodium salt of the pyridine-3,5-bicarboxylic acid (0.03) |
| 31 | — |
| 32 | Calcium salt of the pyridine-2,6-bicarboxylic acid (0.2) |
| 33 | Calcium salt of the pyridine-2,6-bicarboxylic acid (0.1) |
| 34 | Potassium salt of the pyridine-2,6-bicarboxylic acid (0.02) |
| 35 | Potassium salt of the pyridine-2,6-bicarboxylic acid (0.07) |
| 36 | Sodium salt of the pyridine-2,6-bicarboxylic acid (0.02) |
| 37 | Sodium salt of the pyridine-2,6-bicarboxylic acid (0.1) |
| 38 | Sodium salt of the ethylenediaminotetracetic acid (0.015) |
| 39 | Potassium salt of ethylenediaminotetraacetic acid (0.012) |
| 40 | Potassium salt of ethylenediaminotetraacetic acid (0.013) |
| 41 | Ammonium salt of the N,N'-(bis-p-carboxybenzoyl)-1,6-diaminohexanoic acid (0.1) |
| 42 | Sodium salt of the pyridine-2,6-bicarboxylic acid (0.02) |
| 43 | Potassium salt of the pyridine-3,5-bicarboxylic acid (0.03) |
| 44 | Sodium salt of the pyridine-2,6-bicarboxylic acid (0.02) |
| 45 | Potassium salt of the ethylenediaminotetraacetic acid (0.01) plus Potassium salt of the pyridine-2,6-bicarboxylic acid (0.003) |
| 46 | Salt of sodium and ammonium of the ethylenediaminotetraacetic acid (0.03) |
| 47 | Potassium salt of the trans-cyclohexane-1,4-bicarboxylic acid (0.035) |
| 48 | Potassium salt of the biphenylsulfone-4,4'-bicarboxylic acid (0.1) |
| 49 | — |

TABLE 1 (continued)

| Example | Additive (phr) |
|---|---|
| 50 | Potassium salt of the biphenylsulfone-4,4'-bicarboxylic acid (0.1) |
| 51 | — |
| 52 | Potassium salt of the biphenylsulfone-4,4'-bicarboxylic acid (0.1) |
| 53 | Sodium salt of the N-cyclohexyl-4-carboxyphthalimide (0.1) |
| 54 | Sodium salt of the N-cyclohxyl-4-carboxyphthalimide (0.1) |
| 55 | Potassium salt of the biphenylsulfone-4,4'-bicarboxylic acid (0.075) |
| 56 | — |
| 57 | Potassium salt of the biphenylsulfone-4,4'-bicarboxylic acid (0.075) |
| 58 | — |
| 59 | Potassium salt of the biphenylsulfone-4,4'-bicarboxylic acid (0.075) |
| 60 | Potassium salt of the biphenylsulfone-4,4'-bicarboxylic acid (0.1) |
| 61 | Potassium salt of the biphenylsulfone-4,4'-bicarboxylic acid (0.075) |
| 62 | Potassium salt of the biphenylsulfone-4,4'-bicarboxylic acid (0.075) |
| 63 | Potassium salt of the biphenylsulfone-4,4'-bicarboxylic acid (0.05) |
| 64 | — |
| 65 | Potassium salt of the biphenylsulfone-4,4'-bicarboxylic acid (0.05) |
| 66 | Potassium salt of the biphenylsulfone-4,4'-bicarboxylic acid (0.05) |
| 67 | Potassium salt of the biphenylsulfone-4,4'-bicarboxylic acid (0.05) |
| 68 | Potassium salt of the biphenylsulfone-4,4'-bicarboxylic acid (0.05) |
| 69 | Potassium salt of the biphenylsulfone-4,4'-bicarboxylic acid (0.05) |
| 70 | Potassium salt of the biphenylsulfone-4,4'-bicarboxylic acid (0.05) |
| 71 | Sodium salt of the biphenylsulfone-4,4'-bicarboxylic acid (0.1) |
| 72 | — |
| 73 | Sodium salt of the biphenylsulfone-4,4'-bicarboxylic acid (0.1) |
| 74 | Sodium salt of the biphenylsulfone-4,4'-bicarboxylic acid (0.035) |
| 75 | Sodium salt of the biphenylsulfone-4,4'-bicarboxylic acid (0.035) |
| 76 | Sodium salt of the 4-benzenesulfonebenzoic acid (0.05) |
| 77 | — |
| 78 | Sodium salt of the 4-benzenesulfonebenzoic acid (0.05) |
| 79 | Potassium salt of the biphenylsulfone-4,4'-bicarboxylic acid (0.075) |
| 80 | Potassium salt of the biphenylsulfone-4,4'-bicarboxylic acid (0.075) |

TABLE 1 (continued)

| Example | Additive (phr) |
|---|---|
| 81 | — |
| 82 | Potassium salt of the biphenylsulfone-4,4'-bicarboxylic acid (0.035) |
| 83 | Potassium salt of the N-cyclohexyl-4-carboxyphthalimide (0.1) |
| 84 | Potassium salt of the N-cyclohexyl-4-carboxyphthalimide (0.1) |
| 85 | Potassium salt of the biphenylsulfone-4,4'-bicarboxylic acid (0.1) |
| 86 | — |
| 87 | Potassium salt of the biphenylsulfone-4,4'-bicarboxylic acid (0.1) |
| 88 | Potassium salt of the biphenylsulfone-4,4'-bicarboxylic acid (0.035) |
| 89 | — |
| 90 | Potassium salt of the biphenylsulfone-4,4'-bicarboxylic acid (0.035) |
| 91 | Potassium salt of the biphenylsulfone-4,4'-bicarboxylic acid (0.1) |
| 92 | — |
| 93 | Potassium salt of the biphenylsulfone-4,4'-bicarboxylic acid (0.1) |
| 94 | — |
| 95 | Potassium salt of the biphenylsulfone-4,4'-bicarboxylic acid (0.1) |
| 96 | Zinc salt of the biphenylsulfone-4,4'-bicarboxylic acid (0.05) |
| 97 | Zinc salt of the biphenylsulfone-4,4'-bicarboxylic acid (0.05) |
| 98 | Magnesium salt of the biphenylsulfone-4,4'-bicarboxylic acid (0.1) |
| 99 | Magnesium salt of the biphenylsulfone-4,4'-bicarboxylic acid (0.1) |
| 100 | Lithium salt of the biphenylsulfone-4,4'-bicarboxylic acid (0.1) |
| 101 | Lithium salt of the biphenylsulfone-4,4'-bicarboxylic acid (0.1) |
| 102 | Potassium salt of the biphenylsulfone-4,4'-bicarboxylic acid (0.05) |
| 103 | — |
| 104 | Potassium salt of the biphenylsulfone-4,4'-bicarboxylic acid (0.05) |
| 105 | Potassium salt of the biphenylsulfone-4,4'-bicarboxylic acid (0.035) |
| 106 | — |
| 107 | Potassium salt of the biphenylsulfone-4,4'-bicarboxylic acid (0.035) |
| 108 | Potassium salt of the N-cyclohexyl-4-carboxyphthalimide (0.1) |
| 109 | Potassium salt of the N-cyclohexyl-4-carboxyphthalimide (0.025) |

TABLE 1 (continued)

| Example | Adjuvant (phr) |
|---|---|
| 8 | None |
| 9 | Potassium bromide (0.1) |
| 10 | None |
| 11 | Decabromobiphenyloxide (0.1) |
| 12 | None |
| 13 | Bromided polyphenyl oxide (Br = 67.3%) (0.15) |
| 14 | Bromided polyphenylene oxide (Br = 67.3%) (0.1) |
| 15 | None |
| 16 | Bromided polyphenylene oxide (Br = 67.3%) (0.15) |
| 17 | 2,2,2-trifluoroethylester of the biphenylsulfone-4,4'-bicarboxylic acid (0.2) |
| 18 | 2,2,2-trifluoroethylester of the biphenylsulfone-4,4'-bicarboxylic acid (0.2) |
| 19 | Biphenyl-4,4'-ditolylsulfone (0.3) |
| 20 | Biphenyl-4,4'-ditolylsulfone (0.3) |
| 21 | Decabromobiphenyloxide (0.2) |
| 22 | N-cyclohexyltetrachlorophthalimide (0.25) |
| 23 | N-cyclohexyltetrachlorophthalimide (0.2) |
| 24 | N,N'-dicyclohexylimide of the pyromellitic acid (0.3) |
| 25 | None |
| 26 | N,N'-dicyclohexylimide of the pyromellitic acid (0.2) |
| 27 | Bromided polyphenyleneoxide (Br = 67.3%) (0.3) + carbon black (0.1) |
| 28 | Tetrabromobisphenol A bis (2,3-dibromopropylether) (0.15) |
| 29 | Tetrabromobisphenol A bis (2,3-dibromopropylether) (0.15) |
| 30 | Tetrabromobisphenol A bis (2,3-dibromopropylether) (0.1) + potassium bromide (0.1) |
| 31 | Tetrabromobisphenol A bis (2,3-dibromopropylether) (0.1) + potassium bromide (0.1) |
| 32 | None |
| 33 | Decabromobiphenyloxide (0.1) |
| 34 | Tetrabromobisphenol A bis (2-hydroxyethylether-bis-acrylate (0.1) |
| 35 | Bromided polyphenyleneoxide (Br = 67.3%) (0.3) + iron oxide (0.1) + carbon black (0.3) |
| 36 | Decabromobiphenyloxide (0.1) |
| 37 | Bromided polyphenyleneoxide (Br = 67.3%) (0.3) + boric oxide (0.1) + carbon black (0.3) |

TABLE 1 (continued)

| Example | Adjuvant (phr) |
|---|---|
| 38 | Decabromobiphenyloxide (0.1) |
| 39 | Octabromobiphenyloxide (0.1) |
| 40 | Tetrabromobisphenol A bis (2-hydroxyethylether)-bis acrylate (0.1) |
| 41 | Decabromobiphenyloxide (0.2) |
| 42 | Decabromobiphenyloxide (0.05) + N,N'-bicyclohexylimide of the pyromellitic acid (0.05) |
| 43 | Bromided polyphenyleneoxide (Br = 67.3%) (0.07) + N,N'-bicyclohexylimide of the pyromellitic acid (0.05) |
| 44 | Biphenyl-4,4'-ditolylsulfone (0.1) + N,N'-bicyclohexylimide of the pyromellitic acid (0.05) |
| 45 | Decabromobiphenyloxide (0.07) |
| 46 | Decabromobiphenyloxide (0.07) + biphenyl-4,4'-ditolylsulfone (0.05) |
| 47 | Potassium bromide (0.15) |
| 48 | None |
| 49 | Residue of the pyrolysis of the potassium salt of the biphenylsulfone-4,4'-bicarboxylic acid (0.15) |
| 50 | Residue of the pyrolysis of the potassium salt of the biphenylsulfone-4,4'-bicarboxylic acid (0.1) |
| 51 | Carbon black (0.1) |
| 52 | Carbon black (0.1) |
| 53 | None |
| 54 | Carbon black (0.1) |
| 55 | None |
| 56 | Cuprous oxide (0.15) |
| 57 | Cuprous oxide (0.15) |
| 58 | Cobalt oxide (0.15) |
| 59 | Cobalt oxide (0.15) |
| 60 | Silicon dioxide (0.2) |
| 61 | Neodymium oxide (0.15) |
| 62 | Manganese oxide (0.15) |
| 63 | None |
| 64 | Potassium bromide (0.1) |
| 65 | Potassium bromide (0.1) |
| 66 | Potassium chloride (0.15) |
| 67 | Cobalt oxide (0.07) + Potassium bromide (0.05) |

TABLE 1 (continued)

| Example | Adjuvant (phr) |
|---|---|
| 68 | Residue of the pyrolysis of the potassium salt of the biphenylsulfone-4,4′-bicarboxylic acid (0.05) + carbon black (0.07) |
| 69 | Boric oxide (0.05) + Potassium bromide (0.07) |
| 70 | Chromic oxide (0.05) + carbon black (0.05) |
| 71 | None |
| 72 | Biphenyl-4,4′-biphenylsulfone (0.2) |
| 73 | Biphenyl-4,4′-biphenylsulfone (0.2) |
| 74 | Biphenyl-4,4′-ditolylsulfone (0.1) |
| 75 | Biphenyl-4,4′-ditolylsulfone (0.1) + Potassium bromide (0.1) |
| 76 | None |
| 77 | Biphenyl-4,4′-ditolylsulfone (0.3) |
| 78 | Biphenyl-4,4′-ditolylsulfone (0.3) |
| 79 | None |
| 80 | Biphenylcarbonate-4,4′-biphenylsulfone (0.1) + Potassium bromide (0.1) |
| 81 | Biphenyl-4,4′-ditolylsulfone (0.1) + Potassium chloride (0.15) |
| 82 | Biphenyl-4,4′-ditolylsulfone (0.1) + Potassium chloride (0.15) |
| 83 | None |
| 84 | Biphenyl-4,4′-biphenylsulfone (0.2) |
| 85 | None |
| 86 | N,N′-bicyclohexylimide of the pyromellitic acid (0.3) |
| 87 | N,N′-bicyclohexylimide of the pyromellitic acid (0.3) |
| 88 | N,N′-bicyclohexylimide of the pyromellitic acid (0.1) |
| 89 | N,N′-bicyclohexylimide of the pyromellitic acid (0.2) + Potassium bromide (0.2) |
| 90 | N,N′-bicyclohexylimide of the pyromellitic acid (0.1) + Potassium bromide (0.05) |
| 91 | None |
| 92 | Bromided polyphenyleneoxide (Br = 67.3%) (0.15) |
| 93 | Bromided polyphenyleneoxide (Br = 67.3%) (0.1) |
| 94 | Decabromobiphenyloxide (0.1) |
| 95 | Decabromobiphenyloxide (0.1) |
| 96 | None |
| 97 | Bromided polyphenyleneoxide (Br = 67.3%) (0.15) |

TABLE 1 (continued)

| Example | Adjuvant (phr) |
|---|---|
| 98 | None |
| 99 | Bromided polyphenyleneoxide (Br = 67.3%) (0.1) |
| 100 | None |
| 101 | Decabromobiphenyloxide (0.075) |
| 102 | None |
| 103 | Tetrabromobisphenol A bis (2,3-dibromopropylether) (0.1) |
| 104 | Tetrabromobisphenol A bis (2,3-dibromopropylether) (0.1) |
| 105 | None |
| 106 | Tetrabromobisphenol A bis (2,3-dibromopropylether) (0.1) + Potassium bromide (0.1) |
| 107 | Tetrabromobisphenol A bis (2,3-dibromopropylether) (0.1) + Potassium bromide (0.1) |
| 108 | None |
| 109 | Decabromobiphenyloxide (0.2) |

TABLE 1 (continued)

| Example | Total comb. time of 5 samples (10 ignit.) sec (A) | Max. comb. time per sample (2 ignit.) sec (B) | Number of inflamed drops for 5 samples, which inflame cotton pad (C) | UL—94 Classific (D) | LOI % (E) | MFI 300°C—1.2 kg g/10 mins (F) | Transmitted Light:, % (G) |
|---|---|---|---|---|---|---|---|
| R | 250 | 74 | 7 | Burns | 26 | 5,8 | 88,9 |
| 8 | 48 | 14 | 0 | V—1 | 35 | 7,7 | 88,0 |
| 9 | 31 | 9 | 0 | V—0 | 36 | 7,9 | 86,3 |
| 10 | 56 | 16 | 0 | V—1 | 34 | 8,0 | 87,1 |
| 11 | 33 | 9 | 0 | V—0 | 36 | 8,2 | 87,0 |
| 12 | 45 | 12 | 0 | V—1 | 36 | 6,8 | 87,4 |
| 13 | 79 | 19 | 4 | V—2 | 29 | 6,0 | 88,1 |
| 14 | 36 | 9 | 0 | V—0 | 37 | 7,0 | 87,0 |
| 15 | 81 | 18 | 1 | V—2 | 33 | 6,8 | 88,4 |
| 16 | 39 | 10 | 0 | V—0 | 36 | 7,1 | 87,6 |
| 17 | 87 | 23 | 3 | V—2 | 29 | 6,1 | 88,7 |
| 18 | 42 | 10 | 0 | V—0 | 35 | 7,0 | 88,2 |
| 19 | 70 | 19 | 2 | V—2 | 33 | 6,0 | 87,8 |
| 20 | 31 | 9 | 0 | V—0 | 36 | 7,3 | 87,1 |
| 21 | 22 | 6 | 0 | V—0 | 38 | 6,1 | 87,5 |
| 22 | 83 | 21 | 4 | V—2 | 29 | 5,9 | 88,8 |
| 23 | 23 | 6 | 0 | V—0 | 37 | 6,2 | 87,6 |

TABLE 1 (continued)

| Example | Total comb. time of 5 samples (10 ignit.) sec (A) | Max. comb. time per sample (2 ignit.) sec (B) | Number of inflamed drops for 5 samples, which inflame cotton pad (C) | UL—94 Classific (D) | LOI % (E) | MFI 300°C—1.2 kg g/10 mins (F) | Transmitted Light:, % (G) |
|---|---|---|---|---|---|---|---|
| 24 | 90 | 23 | 5 | V—2 | 30 | 6,0 | 88,9 |
| 25 | 52 | 13 | 0 | V—1 | 34 | 5,9 | 87,6 |
| 26 | 31 | 9 | 0 | V—0 | 35 | 6,1 | 87,3 |
| 27 | 20 | 5 | 0 | V—0 | 42 | 6,8 | — |
| 28 | 85 | 24 | 5 | V—2 | 30 | 5,9 | 88,4 |
| 29 | 33 | 8 | 0 | V—0 | 37 | 6,1 | 87,6 |
| 30 | 29 | 8 | 0 | V—0 | 37 | 6,0 | 86,5 |
| 31 | 79 | 19 | 1 | V—2 | 33 | 5,9 | 86,6 |
| 32 | 112 | 26 | 3 | V—2 | 33 | 6,2 | 85,0 |
| 33 | 91 | 24 | 0 | V—1 | 34 | 6,2 | 86,2 |
| 34 | 30 | 9 | 0 | V—0 | 34 | 6,4 | 88,3 |
| 35 | 19 | 4 | 0 | V—0 | 39 | 6,0 | — |
| 36 | 23 | 8 | 0 | V—0 | 35 | 6,4 | 88,3 |
| 37 | 12 | 4 | 0 | V—0 | 42 | 6,6 | — |
| 38 | 26 | 8 | 0 | V—0 | 38 | 6,4 | 88,8 |
| 39 | 34 | 9 | 0 | V—0 | 34 | 6,1 | 88,9 |
| 40 | 27 | 8 | 0 | V—0 | 37 | 6,1 | 88,7 |

TABLE 1 (continued)

| Example | Total comb. time of 5 samples (10 ignit.) sec | Max. comb. time per sample (2 ignit.) sec | Number of inflamed drops for 5 samples, which inflame cotton pad | UL—94 Classific | LOI % | MFI 300°C—1.2 kg g/10 mins | Transmitted Light:, % |
|---|---|---|---|---|---|---|---|
| | (A) | (B) | (C) | (D) | (E) | (F) | (G) |
| 41 | 73 | 16 | 0 | V—1 | 33 | 5,9 | 88,3 |
| 42 | 22 | 7 | 0 | V—0 | 36 | 6,0 | 88,1 |
| 43 | 30 | 8 | 0 | V—0 | 37 | 6,0 | 87,6 |
| 44 | 21 | 8 | 0 | V—0 | 36 | 5,9 | 88,6 |
| 45 | 15 | 4 | 0 | V—0 | 37 | 6,1 | 88,4 |
| 46 | 29 | 7 | 0 | V—0 | 36 | 6,3 | 88,0 |
| 47 | 39 | 9 | 0 | V—0 | 36 | 6,0 | 86,0 |

TABLE 1 (continued)

| Example | Total comb. time of 5 samples (10 ignit.) sec (A) | Max. comb. time per sample (2 ignit.) sec (B) | Number of inflamed drops for 5 samples, which inflame cotton pad (C) | UL—94 Classific (D) | LOI % (E) | MFI 300°C—1.2 kg g/10 mins (F) |
|---|---|---|---|---|---|---|
| 48 | 38 | 9 | 3 | V—2 | 37 | 8,8 |
| 49 | 67 | 15 | 2 | V—2 | 33 | 8,3 |
| 50 | 46 | 10 | 0 | V—0 | 36 | 8,7 |
| 51 | 118 | 28 | 5 | V—2 | 29 | 8,3 |
| 52 | 37 | 10 | 0 | V—0 | 36 | 8,8 |
| 53 | 46 | 15 | 0 | V—1 | 37 | 8,9 |
| 54 | 33 | 9 | 0 | V—0 | 38 | 9,0 |
| 55 | 34 | 9 | 4 | V—2 | 36 | 8,5 |
| 56 | 101 | 27 | 3 | V—2 | 30 | 8,4 |
| 57 | 35 | 9 | 0 | V—0 | 37 | 8,7 |
| 58 | 121 | 29 | 3 | V—2 | 29 | 8,5 |

TABLE 1 (continued)

| Example | Total comb. time of 5 samples (10 ignit.) sec (A) | Max. comb. time per sample (2 ignit.) sec (B) | Number of inflamed drops for 5 samples, which inflame cotton pad (C) | UL—94 Classific (D) | LOI % (E) | MFI 300°C—1.2 kg g/10 mins (F) |
|---|---|---|---|---|---|---|
| 59 | 36 | 9 | 0 | V—0 | 34 | 8,9 |
| 60 | 47 | 10 | 0 | V—0 | 37 | 8,8 |
| 61 | 36 | 10 | 0 | V—0 | 35 | 8,9 |
| 62 | 48 | 10 | 0 | V—0 | 36 | 9,0 |
| 63 | 35 | 10 | 4 | V—2 | 36 | 8,2 |
| 64 | 96 | 30 | 4 | V—2 | 31 | 8,1 |
| 65 | 32 | 7 | 0 | V—0 | 38 | 8,2 |
| 66 | 34 | 7 | 0 | V—0 | 38 | 8,2 |
| 67 | 35 | 8 | 0 | V—0 | 35 | 8,3 |
| 68 | 43 | 10 | 0 | V—0 | 36 | 8,3 |
| 69 | 39 | 10 | 0 | V—0 | 34 | 8,4 |
| 70 | 34 | 9 | 0 | V—0 | 38 | 8,7 |

TABLE 1 (continued)

| Example | Total comb. time of 5 samples (10 ignit.) sec (A) | Max. comb. time per sample (2 ignit.) sec (B) | Number of inflamed drops for 5 samples, which inflame cotton pad (C) | UL—94 Classific (D) | LOI % (E) | MFI 300°C—1.2 kg g/10 mins (F) | Transmitted Light:, % (G) |
|---|---|---|---|---|---|---|---|
| 71 | 27 | 9 | 3 | V—2 | 37 | 8,7 | 84,2 |
| 72 | 79 | 24 | 2 | V—2 | 32 | 8,6 | 84,0 |
| 73 | 33 | 10 | 0 | V—0 | 37 | 8,9 | 83,4 |
| 74 | 48 | 15 | 0 | V—1 | 35 | 8,3 | 85,1 |
| 75 | 34 | 9 | 0 | V—0 | 37 | 8,4 | 84,6 |
| 76 | 65 | 16 | 2 | V—2 | 35 | 9,4 | 84,0 |
| 77 | 73 | 21 | 2 | V—2 | 33 | 8,6 | 84,1 |
| 78 | 41 | 10 | 0 | V—0 | 36 | 9,3 | 83,3 |
| 79 | 34 | 9 | 4 | V—2 | 36 | 8,5 | 85,0 |
| 80 | 32 | 9 | 0 | V—0 | 36 | 8,8 | 84,8 |
| 81 | 60 | 14 | 1 | V—2 | 31 | 8,3 | 79,1 |
| 82 | 29 | 8 | 0 | V—0 | 35 | 8,3 | 78,2 |
| 83 | 43 | 14 | 0 | V—1 | 38 | 8,9 | 85,8 |
| 84 | 25 | 7 | 0 | V—0 | 39 | 9,1 | 84,0 |

TABLE 1 (continued)

| Example | Total comb. time of 5 samples (10 ignit.) sec | Max. comb. time per sample (2 ignit.) sec | Number of inflamed drops for 5 samples, which inflame cotton pad | UL—94 Classific | LOI % | MFI 300°C—1.2 kg g/10 mins | Transmitted Light:, % |
|---|---|---|---|---|---|---|---|
| | (A) | (B) | (C) | (D) | (E) | (F) | (G) |
| 85 | 38 | 9 | 3 | V—2 | 37 | 8,8 | 84,6 |
| 86 | 92 | 25 | 5 | V—2 | 31 | 8,3 | 86,0 |
| 87 | 36 | 10 | 0 | V—0 | 38 | 8,9 | 84,2 |
| 88 | 47 | 14 | 0 | V—1 | 34 | 8,6 | 85,5 |
| 89 | 40 | 13 | 1 | V—2 | 33 | 9,0 | 83,2 |
| 90 | 31 | 9 | 0 | V—0 | 35 | 8,7 | 84,7 |

TABLE 1 (continued)

| Example | Total comb. time of 5 samples (10 ignit.) sec | Max. comb. time per sample (2 ignit.) sec | Number of inflamed drops for 5 samples, which inflame cotton pad | UL—94 Classific | LOI % | MFI 300°C—1.2 kg g/10 mins | Transmitted Light:, % |
|---|---|---|---|---|---|---|---|
| | (A) | (B) | (C) | (D) | (E) | (F) | (G) |
| 91 | 38 | 9 | 3 | V—2 | 37 | 8,8 | 84,6 |
| 92 | 81 | 22 | 4 | V—2 | 29 | 8,5 | 85,4 |
| 93 | 40 | 10 | 0 | V—0 | 39 | 8,8 | 84,2 |
| 94 | 72 | 19 | 5 | V—2 | 30 | 8,5 | 86,0 |
| 95 | 21 | 6 | 0 | V—0 | 40 | 9,0 | 84,0 |
| 96 | 87 | 25 | 4 | V—2 | 31 | 8,3 | 79,3 |
| 97 | 30 | 8 | 0 | V—0 | 37 | 8,7 | 77,5 |
| 98 | 55 | 20 | 4 | V—2 | 33 | 8,2 | 80,0 |
| 99 | 46 | 10 | 0 | V—0 | 36 | 8,5 | 79,2 |
| 100 | 39 | 15 | 3 | V—2 | 34 | 8,2 | 80,4 |
| 101 | 41 | 10 | 0 | V—0 | 36 | 8,4 | 81,0 |

TABLE 1 (continued)

| Example | Total comb. time of 5 samples (10 ignit.) sec | Max. comb. time per sample (2 ignit.) sec | Number of inflamed drops for 5 samples, which inflame cotton pad | UL—94 Classific | LOI % | MFI 300°C—1.2 kg g/10 mins | Transmitted Light:, % |
|---|---|---|---|---|---|---|---|
| | (A) | (B) | (C) | (D) | (E) | (F) | (G) |
| 102 | 35 | 10 | 4 | V—2 | 36 | 8,2 | 85,0 |
| 103 | 87 | 27 | 5 | V—2 | 30 | 8,4 | 85,6 |
| 104 | 43 | 10 | 0 | V—0 | 35 | 8,6 | 85,0 |
| 105 | 46 | 12 | 4 | V—2 | 33 | 8,2 | 85,5 |
| 106 | 74 | 17 | 1 | V—2 | 33 | 8,4 | 85,6 |
| 107 | 31 | 7 | 0 | V—0 | 38 | 8,9 | 85,1 |
| 108 | 43 | 14 | 0 | V—1 | 38 | 8,9 | 85,8 |
| 109 | 29 | 8 | 0 | V—0 | 37 | 8,4 | 85,5 |

TABLE 2

| Example No. | Thermal Stability* at 300°C. Δ % MFI (300°C; 1.2 kg) after 60 mins. | Izod resil. ductile/ brittle °C | Vicat 1 kg °C | HDT °C | Bending stress | | Pulling strain | | |
|---|---|---|---|---|---|---|---|---|---|
| | | | | | Elast. Modulus MPa | Load, max. MPa | Yield point MPa | Tensile str. MPa | Elongation at break, % |
| Ref. sample | 24,3 | −30 | 158 | 130 | 2264 | 94 | 60 | 66 | 125 |
| 21 | 13,3 | −20 | 158 | 130 | 2345 | 96 | 60 | 66 | 124 |
| 27 | 13,6 | −25 | 158 | 130 | 2342 | 95 | 60 | 69 | 132 |
| 36 | 16,1 | −25 | 160 | 130 | 2286 | 96 | 60 | 69 | 130 |
| 37 | — | −25 | 160 | 130 | 2349 | 97 | 60 | 66 | — |
| 38 | 24,0 | −30 | 158 | 130 | 2300 | 96 | 61 | 66 | 129 |

*Thermal stability is expressed in terms of $\frac{MFI(t=60)-MFI(t=0)}{MFI\ (t=0)}$

**Claims for the Contracting States: BE CH DE FR GB LI LU NL SE**

1. A self-extinguishing, halogen-free polycarbonate composition consisting of a polycarbonate resin base and of

(A) at least one salt of carboxylic organic compounds having the general formula (I), or mixtures thereof, said salt being a salt of a metal belonging to the Groups IA, IB, IIA or IIB of the Periodic Table of the Elements, and/or of ammonium:

$$(HOOC)_m—(A_1)_{s1}—(X)_i—(A_2)_{s2}—(COOH)_n \qquad (I)$$

wherein:

$A_1$ and $A_2$, equal or different, are phenyl, pyridyl cyclohexyl, or an aliphatic radical;

*m* and *n*, equal or different, are integers from 0 to 5, either of them being other than zero, both being at least 1 when $A_1$ and $A_2$ are aliphatic radicals; $s_1$ and $s_2$, equal or different are integers from 0 to 5, either of them being other than zero;

*i* is either zero or 1;

*X* being, when the compound of formula (I) is a metal salt, a diradical or a pluriradical selected from among $—SO_2$ $>(CO)_2N—$, $=N—R—N=$, wherein R is a straight-lined, or a branched aliphatic radical,

*X* being, when the compound of formula (I) is an ammonium salt, a biradical or a pluriradical which can be $=N—R—N=$, R being as defined above, plus

(B) at least one of the following components:

1) a halogen-substituted organic ether obtained by etherifying mono- or polyfunctional, totally or partially halogen-substituted alcohols or phenols;

2) an optionally halogen-substituted imide;

3) an optionally halogen-substituted organic sulfone;

4) an inorganic adjuvant selected from among the halides of alkali- or alkaline earth metals, the oxides of metals of the Groups IB, VIB, VIIB, IIIA, IVA VIII and lanthanides, carbon black, and the pyrolysis residues of any compound of the general formula (I) above.

2. A composition according to claim I, wherein the component (B) is a halogen-substituted organic ether obtained by etherifying mono- and polyfunctional, at least partially substituted alcohols or phenols having the general formula:

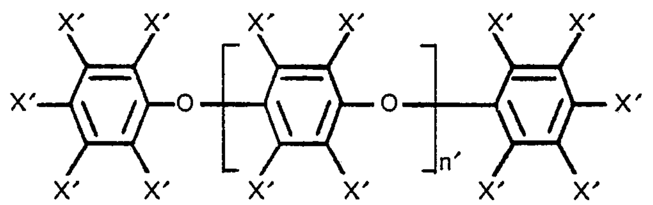

(II)

wherein *n'* is comprised between 0 and $10^4$ and the substituent X' is selected from among hydrogen, fluorine, chlorine and bromine, with the proviso that at least one halogen atom is present in at least one aromatic ring.

3. A composition according to claim 1, wherein the component (B) is a halogen-substituted organic ether obtained by etherifying mono- and polyfunctional, at least partially substituted alcohols or phenols, having the general formula:

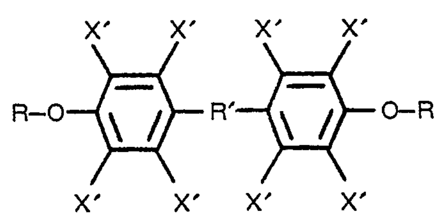

(III)

wherein *X'* has the same meaning as defined in claim 2 and with the same proviso, and *R* and *R'*, equal to, or different from one another, are optionally halogen-substituted alkyl or cycloalkyl radicals.

4. A composition according to claim 1, wherein the component (B) is an optionally halogen substituted imide selected from among the imides having the general formulae:

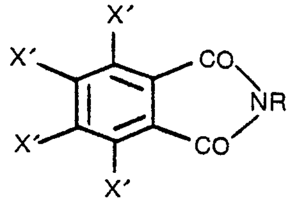

(IV)

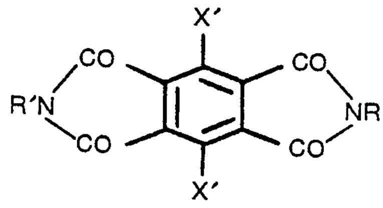

(V)

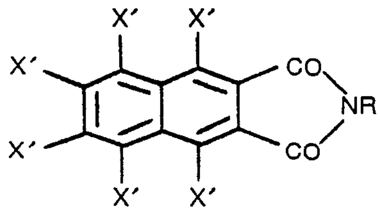

(VI)

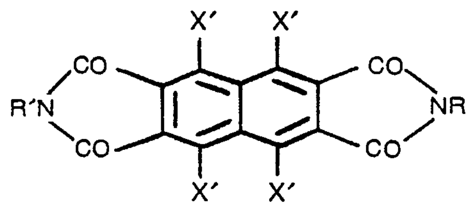

(VII)

wherein *R* and *R'*, equal to, or different from one another, are alkyl, aryl or cycloalkyl radicals and *X'* is selected from among hydrogen, fluorine, chlorine and bromine.

5. A composition according to claim 1, wherein the component (B) is a momomeric or polymeric aromatic sulfone, or a derivative thereof, or a mixture thereof, in which the $—SO_2—$ on one side to an aromatic radical and, on the other side, to at least another optionally substituted aliphatic, aromatic, cycloaliphatic or heterocyclic radical, the substituents being halogens, ether or ester groups, ketone groups, nitrile groups, carbonate groups, amide groups, amine groups and imide groups.

6. A composition according to claim 1, wherein the component (A) is present in an amount of not more than 3 parts by weight for hundred parts of resin (phr).

7. A composition according to claim 6, wherein the component (A) is present in an amount not higher than 0,5 phr.

8. A composition according to claim 1, wherein the component (B) is present in an amount not higher than 3 phr.

9. A composition according to claim 8, wherein the component (B) is present in an amount not higher than 0,8 phr.

**Claims for the Contracting State: AT**

1. A method for preparing a self-extinguishing, halogen-free polycarbonate composition, characterized by the step of supplementing a polycarbonate resin base with:

(A) at least one salt of carboxylic organic compounds having the general formula (I), or mixtures thereof, said salt being a salt of a metal belonging to the Groups IA, IB, IIA or IIB of the Periodic Table of the Elements, and/or of ammonium:

$$(HOOC)_m—(A_1)_{s1}—(X)_i—(A_2)_{s2}—(COOH)_n \quad (I)$$

wherein:

$A_1$ and $A_2$, equal or different, are phenyl, pyridyl cyclohexyl, or an aliphatic radical;

*m* and *n*, equal or different, are integers from 0 to 5, either of them being other than zero, both being at least 1 when $A_1$ and $A_2$ are aliphatic radicals; $s_1$ and $s_2$, equal or different are integers from 0 to 5, either of them being other than zero;

*i* is either zero or 1;

*X* being, when the compound of formula (I) is a metal salt, a diradical or a pluriradical selected from among $—SO_2$ $>(CO)_2N—$, $=N—R—N=$, wherein R is a straight-lined, or a branched aliphatic radical,

*X* being, when the compound of formula (I) is an ammonium salt, a biradical or a pluriradical which can be $=N—R—N=$, R being as defined above, plus

(B) at least one of the following components:

1) a halogen-substituted organic ether obtained by etherifying mono- or polyfunctional, totally or partially halogen-substituted alcohols or phenols;

2) an optionally halogen-substituted imide;

3) an optionally halogen-substituted organic sulfone;

4) an inorganic adjuvant selected from among the halides of alkali- or alkaline earth metals, the oxides

of metals of the Groups IB, VIB, VIIB, IIIA, IVA VIII and lanthanides, carbon black, and the pyrolysis residues of any compound of the general formula (I) above.

2. A method according to claim I, wherein the component (B) is a halogen-substituted organic ether obtained by etherifying mono- and polyfunctional, at least partially substituted alcohols or phenols having the general formula:

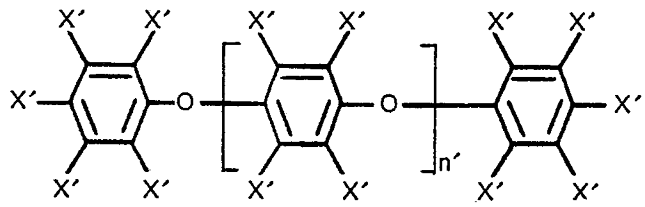

(II)

wherein *n'* is comprised between 0 and $10^4$ and the substituent X' is selected from among hydrogen, fluorine, chlorine and bromine, with the proviso that at least one halogen atom is present in at least one aromatic ring.

3. A method according to claim 1, wherein the component (B) is a halogen-substituted organic ether obtained by etherifying mono- and polyfunctional, at least partially substituted alcohols or phenols, having the general formula:

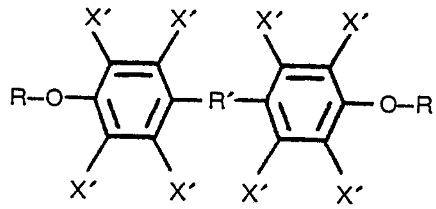

(III)

wherein *X'* has the same meaning as defined in claim 2 and with the same proviso, and *R* and *R'*, equal to, or different from one another, are optionally halogen-substituted alkyl or cycloalkyl radicals.

4. A method according to claim 1, wherein the component (B) is an optionally halogen-substituted imide selected from among the imides having the general formulae:

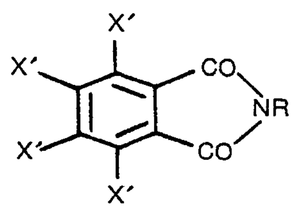

(IV)

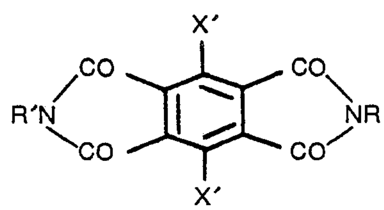

(V)

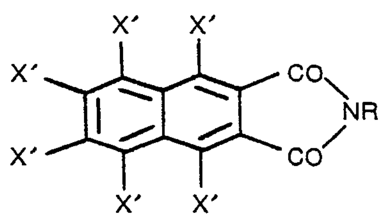

(VI)

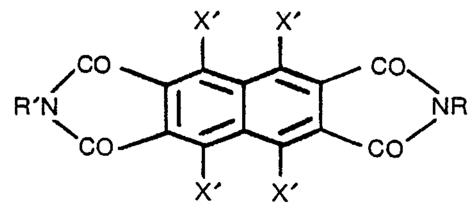

(VII)

wherein *R* and *R'*, equal to, or different from one another, are alkyl, aryl or cycloalkyl radicals and *X'* is selected from among hydrogen, fluorine, chlorine and bromine.

5. A method according to claim 1, wherein the component (B) is a momomeric or polymeric aromatic sulfone, or a derivative thereof, or a mixture thereof, in which the $—SO_2—$ on one side to an aromatic radical and, on the other side, to at least another optionally substituted aliphatic, aromatic, cycloaliphatic or heterocyclic radical, the substituents being halogens, ether or ester groups, ketone groups, nitrile groups, carbonate groups, amide groups, amine groups and imide groups.

6. A method according to claim 1, wherein the component (A) is present in an amount of not more than 3 parts by weight for hundred parts of resin (phr).

7. A method according to claim 6, wherein the component (A) is present in an amount not higher than 0,5 phr.

8. A method according to claim 1, wherein the component (B) is present in an amount not higher than 3 phr.

9. A method according to claim 1, wherein the component (B) is present in an amount not higher than 0,8 phr.

**Patentansprüche für die Vertragsstaaten: BE CH DE FR GB LI LU NL SE**

1. Flammhemmende, halogenfreie Polycarbonat-Zusammensetzung, bestehend aus einem Grundpolycarbonatharz und:

(A) wenigstens einem Salz aus organischem Karboxylverbindungen mit der allgemeinen Formel (I) oder aus Gemischen davon, wobei das Salz eines zu den Gruppen IA, IB, IIA oder IIB der Tabelle des periodischen Elementensystems gehörenden Metalls und/oder ein Ammoniumsalz ist:

$$(HOOC)_m—(A_1)_{s1}—(X)_i—(A_2)_{s2}—(COOH)_n \qquad (I)$$

wo: $A_1$ und $A_2$ gleiche oder ungleiche Phenyl-, Pyridyl, Cyloxhexyl- oder aliphatische Radikale sind,

*m* und *n* gleiche oder ungleiche ganze Zahlen zwischen 0 und 5 sind, das eine der beiden anders als Null ist und beide wenigstens 1 sind, wenn $A_1$ und $A_2$ aliphatische Radikale sind,

$s_1$ und $s_2$ gleiche oder ungleiche ganze Zahlen zwischen 0 und 5 sind und das eine der beiden anders als Null ist,

*i* entweder Null oder 1 ist,

wenn die Verbindung nach der Formel (I) ein Metallsalz ist, *X* ein unter $—SO_2$, $>(CO)_2N—$, $=N—R—N=$ gewähltes, doppeltes oder mehrfaches Radikal ist, indem R ein geradliniges oder ein verzweigtes Radikal ist,

wenn die Verbindung nach der Formel (I) ein Ammoniumsalz ist, *X* ein doppeltes oder ein mehrfaches Radikal ist, das $=N—R—N=$ sein kann, indem R wie oben angegeben ist, plus

(B) wenigstens einem der folgenden Bestandteile ergänzt wird:

1. einem halogen-substituierten organischen Äther, der durch mono- oder polyfunktionelle, vollständig oder teilweise halogen-substituierte Alkohole oder Phenole gebildet wird.

2. einem beliebigen halogen-substituierte Imid,

3. einem beliebigen halogen-substituierte organischeb Sulfon,

4. einem anorganischen Hilfsmittel, das unter den Halogeniden von Alkali- oder alkalischen Edrmetallen, den Oxyden von Metallen der Gruppen IB, VIB, VIIB, IIIA, IVA, VIII und Lanthaniden, Kohlenschwarz oder den Pyrolise-Rückständen irgendeiner der Verbindungen der allgemeinen Formel (I) gewählt wird.

2. Zusammensetzung nach Anspruch 1, dadurch gekennzeichnet, dass der Bestandteil (B) ein halogensubstituierter Äther ist, der durch mono- oder polyfunktionelle, wenigstens teilweise substituierte Alkohole oder Phenole mit der allgemeinen Formel gebildet wird:

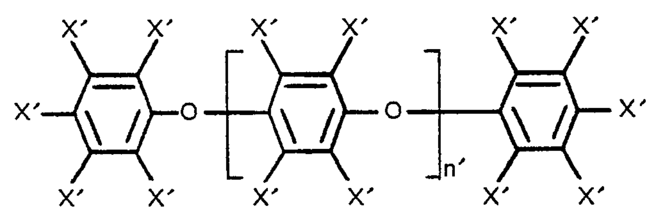

(II)

wo *n'* zwischen 0 und $10^4$ liegt und der Substituent X' unter Wasserstoff, Fluor, Chlor und Brom mit der Bedingung gewählt wird, dass wenigstens ein Halogenatom in wenigstens einem aromatischen Ring vorhanden ist.

3. Zusammensetzung nach Anspruch 1, dadurch gekennzeichnet, dass der Bestandteil (B) ein halogensubstituierter Äther ist, der durch mono- und polyfunktionelle, wenigstens teilweise substituierte Alkohole oder Phenole mit der allgemeinen Formel:

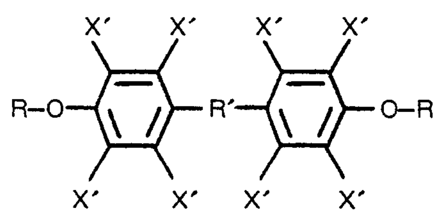

(III)

gebildet wird, wo *X'* die gleiche Bedeutung mit derselben Bedingung hat, wie in Anspruch 2 angegeben, und *R* und $R^1$ einander gleiche oder ungleiche, beliebige halogen-substituierte Alkyl- oder Cycloalkylradikale sind.

4. Zusammensetzung nach Anspruch 1, dadurch gekennzeichnet, dass der Bestandteil (B) ein beliebiges halogen-substituiertes Imid ist, das unter den Imiden mit den allgemeinen Formeln

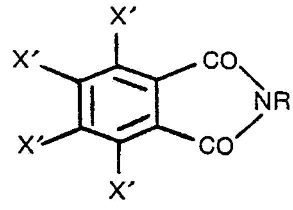

(IV)

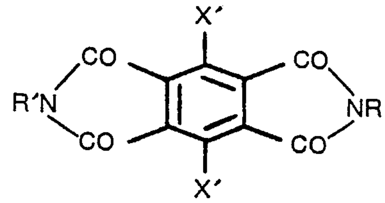

(V)

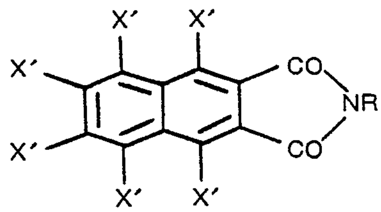

(VI)

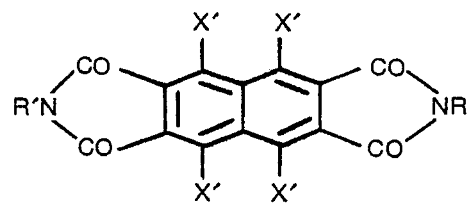

(VII)

gewählt wird, wo *R* und *R'* einander gleiche oder ungleiche Alkyl-, Aryl, oder Cycloalkylradikale sind und *X'* unter Wasserstoff, Fluor, Chlor und Brom gewählt wird.

5. Zusammensetzung nach Anspruch 1, dadurch gekennzeichnet, dass der Bestandteil (B) ein monomeres oder polymeres aromatisches Sulfon bzw. ein Derivat oder ein Gemisch davon ist, wo das $—SO_2—$ einerseits einem aromatischen Radikal und anderseits wenigstens einem anderen beliebig substituierten aliphatischen, aromatischen, cycloapliphatischen oder heterozyklichen Radikal entspricht, wobei die Substituenten Halogene, Äther- oder Estergruppen, Ketongruppen, Nitrilgruppen, Carbonatgruppen, Amidgruppen und Imidgruppen sind.

6. Zusammensetzung nach Anspruch 1, dadurch gekennzeichnet, dass der Bestandteil (A) in einer Menge von nicht mehr als 3 Gewichtsteile je hundert Harzteile (phr) anwesend ist.

7. Zusammensetzung nach Anspruch 6, dadurch gekennzeichnet, dass der Bestandteil (A) in einer Menge von nicht mehr als 0,5 phr anwesend ist.

8. Zusammensetzung nach Anspruch 1, dadurch gekennzeichnet, dass der Bestandteil (B) in einer Menge von nicht mehr als 3 phr anwesend ist.

9. Zusammensetzung nach Anspruch 8, dadurch gekennzeichnet, dass der Bestandteil (B) in einer Menge von nicht mehr als 0,8 phr anwesend ist.

**Patentansprüche den Vertragsstaat: AT**

1. Verfahren zur Vorbereitung einer flammhemmenden, halogenfreien Polycarbonat-Zusammensetzung, dadurch gekennzeichnet, dass ein Grundpolycarbonatharz mit:
(A) wenigstens einem Salz aus organischem Karboxylverbindungen mit der allgemeinen Formel (I) oder aus Gemischen davon, wobei das Salz ein Salz eines zu den Gruppen IA, IB, IIA oder IIB der Tabelle des periodischen Elementensystems gehörenden Metalls und/oder ein Ammoniumsalz ist:

$$(HOOC)_m—(A_1)_{s1}—(X)_i—(A_2)_{s2}—(COOH)_n \qquad (I)$$

wo: $A_1$ und $A_2$ gleiche oder ungleiche Phenyl-, Pyridyl, Cyloxhexyl- oder aliphatische Radikale sind,

*m* und *n* gleiche oder ungleiche ganze Zahlen zwischen 0 und 5 sind, das eine der beiden anders als Null ist und beide wenigstens 1 sind, wenn $A_1$ und $A_2$ aliphatische Radikale sind,

$s_1$ und $s_2$ gleiche oder ungleiche ganze Zahlen zwischen 0 und 5 sind und das eine der beiden anders als Null ist,

*i* entweder Null oder 1 ist,

wenn die Verbindung nach der Formel (I) ein Metallsalz ist, *X* ein unter $—SO_2$, $>(CO)_2N—$, $=N—R—N=$ gewähltes, doppeltes oder mehrfaches Radikal ist, indem R ein geradliniges oder ein verzwigtes Radikal ist,

wenn die Verbindung nach der Formel (I) ein Ammoniumsalz ist, *X* ein doppeltes oder ein mehrfaches Radikal ist, das $=N—R—=$ sein kann, indem R wie oben angegeben ist, plus

(B) wenigstens einem der folgenden Bestandteile ergänzt wird:

1. einem halogen-substituierten organischen Äther, der durch mono- oder polyfunktionelle, vollständig oder teilweise halogen-substituierte Alkohole oder Phenole gebildet wird.

2. einem beliebigen halogen-substituiertes Imid,

3. einem beliebigen halogen-substituierten organischen Sulfon,

4. einem anorganischen Hilfsmittel, das unter den Halogeniden von Alkali- oder alkalischen Edrmetallen, den Oxyden von Metallen der Gruppen IB, VIB, VIIB, IIIA, IVA, VIII und Lanthaniden, Kohlenschwarz oder den Pyrolise-Rückständen irgendeiner der Verbindungen der allgemeinen Formel (I) gewählt wird.

2. Verfahren nach Anspruch 1, dadurch gekennzeichnet, dass der Bestandteil (B) ein halogensubstituierter Äther ist, der durch mono- oder polyfunktionelle, wenigstens teilweise substituierte Alkohole oder Phenole mit der allgemeinen Formel gebildet wird:

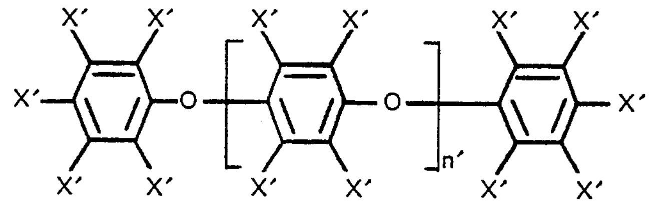
(II)

wo $n'$ zwischen 0 und $10^4$ liegt und der Substituent X' unter Wasserstoff, Fluor, Chlor und Brom mit der Bedingung gewählt wird, dass wenigstens ein Halogenatom in wenigstens einem aromatischen Ring vorhanden ist.

3. Verfahren nach Anspruch 1, dadurch gekennzeichnet, dass der Bestandteil (B) ein halogensubstituierter Äther ist, der durch mono und oder polyfunktionelle, wenigstens teilweise substituierte Alkohole oder Phenole mit der allgemeinen Formel:

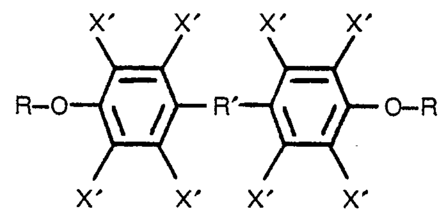
(III)

gebildet wird, wo $X'$ die gleiche Bedeutung mit derselben Bedingung hat, wie in Anspruch 2 angegeben, und $R$ und $R^2$ einander gleiche oder ungleiche, beliebige halogen-substituierte Alkyl- oder Cycloalkylradikale sind.

4. Verfahren nach Anspruch 1, dadurch gekennzeichnet, dass der Bestandteil (B) ein beliebiges halogen-substituiertes Imid ist, das unter den Imiden mit den allgemeinen Formeln

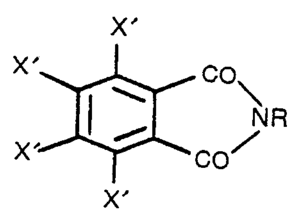
(IV)

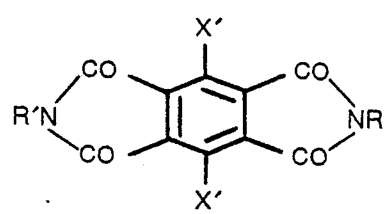
(V)

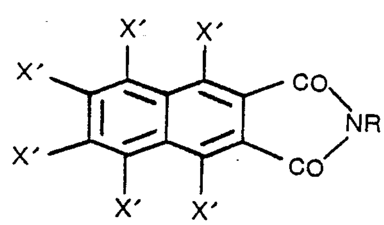
(VI)

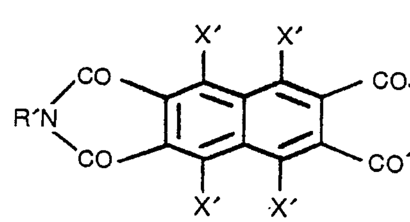
(VII)

gewählt wird, wo $R$ und $R'$ einander gleiche oder ungleiche Alkyl-, Aryl, oder Cycloalkylradikale sind und $X'$ unter Wasserstoff, Fluor, Chlor und Brom gewählt wird.

5. Verfahren nach Anspruch 1, dadurch gekennzeichnet, dass der Bestandteil (B) ein monomeres oder polymeres aromatisches Sulfon bzw. ein Derivat oder ein Gemisch davon ist, wo das $-SO_2-$ einerseits einem aromatischen Radikal und anderseits wenigstens einem anderen beliebig substituierten aliphatischen, aromatischen, cycloapliphatischen oder heterozyklichen Radikal entspricht, wobei die

Substituenten Halogene, Äther- oder Estergruppen, Ketongruppen, Nitrilgruppen, Carbonatgruppen, Amidgruppen und Imidgruppen sind.

6. Verfahren nach Anspruch 1, dadurch gekennzeichnet, dass der Bestandteil (A) in einer Menge von nicht mehr als 3 Gewichtsteile je hundert Harzteile (phr) anwesend ist.

7. Verfahren nach Anspruch 6, dadurch gekennzeichnet, dass der Bestandteil (A) in einer Menge von nicht mehr als 0,5 phr anwesend ist.

8. Verfahren nach Anspruch 1, dadurch gekennzeichnet, dass der Bestandteil (B) in einer Menge von nicht mehr als 3 phr anwesend ist.

9. Verfahren nach Anspruch 8, dadurch gekennzeichnet, dass der Bestandteil (B) in einer Menge von nicht mehr als 0,8 phr anwesend ist.

**Revendications pour les Etats contractants: BE CH DE FR GB LI LU NL SE**

1. Composition de polycarbonate exempte d'halogène, auto-extinguible, constituée d'une base de résine de polycarbonate et de

(A) au moins un sel de composés organiques carboxyliques ayant la formule générale (I), ou leurs mélanges, ledit sel étant un sel d'un métal appartenant à l'un des groupes IA, IB, IIA ou IIB du Tableau Périodique des éléments, et/ou d'ammonium:

$$(HOOC)_m—(A_1)_{s1}—(X)_i—(A_2)_{s2}—(COOH)_n \qquad (I)$$

dans laquelle: $A_1$ et $A_2$, identiques ou différents, sont des groupes phényle pyridyle, cyclohexyle, ou des groupes aliphatiques;

*m* et *n*, identiques ou différents, sont des nombres entiers compris entre 0 et 5, l'un ou l'autre d'entre eux étant différent de zéro, et les deux valant au moins 1 lorsque $A_1$ et $A_2$ sont des groupes aliphatiques;

$s_1$ et $s_2$, identiques ou différents, sont des nombres entiers compris entre 0 et 5, l'un ou l'autre d'entre eux étant différent de zéro;

*i* vaut 0 ou 1;

*X* étant, lorsque le composé de formule (I) est un sel métallique, un radical divalent ou plurivalent, choisi parmi $—SO_2$, $>(CO)_2N—$, $=N—R—N=$, où R est un radical aliphatique, linéaire ou ramifié,

*X* étant, lorsque le composé de formule (I) est un sel d'ammonium, un radical bivalent ou plurivalent qui peut être $=N—R—N=$, R étant tel que défini ci-dessus, avec

(B) au moins un des composant suivants:

1) un éther organique halogéno-substitue', obtenu par éthérification d'alcools ou phénols monofonctionnels ou polyfonctionnels, totalement ou partiellement halogéno-substitués;

2) un imide éventuellement halogéno-substitué;

3) une sulfone organique éventuellement halogéno-substituée;

4) un adjuvant minéral, choisi parmi les halogénures de métaux alcalins ou alcalino-terreux, les oxydes des métaux des groupes IB, VIB, VIIB, IIIA, IVA, VIII et des lanthanides, le noir de carbone, et les résidus de pyrolyse de l'un quelconque des composés de formule générale (I) ci-dessus.

2. Composition conforme à la revendication 1, dans laquelle le composant (B) est un éther organique halogéno-substitué obtenu par éthérification d'alcools ou phénols monofonctionnels et polyfonctionnels, au moins partiellement substitués, et présentant la formule générale:

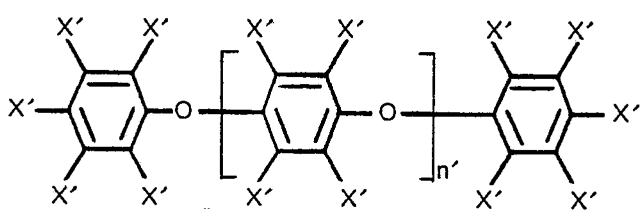

(II)

dans laquelle *n'* est compris entre 0 et $10^4$, et les substituants X' sont choisis parmi des atomes d'hydrogène, de fluor, de chlore et de brome, avec la condition qu'au moins un atome d'halogène soit présent dans au moins un noyau aromatique.

3. Composition conforme à la revendication 1, dans laquelle le composant (B) est un éther organique halogéno-substitué obtenu par éthérification d'alcools ou phénols monofonctionnels et polyfonctionnels, au moins partiellement substitués, et présentant la formule générale:

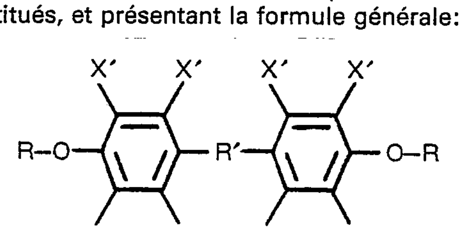

(III)

dans laquelle *X'* a la même signification que celle définie dans la revendication 2, avec la même condition, et *R* et *R'*, identiques ou différents les uns des autres, sont des radicaux alkyle ou cycloalkyle éventuellement halogéno-substitués.

4. Composition conforme à la revendication 1, dans laquelle le composant (B) est un imide éventuellement halogéno-substitué, choisi parmi les imides présentant les formules générales suivantes:

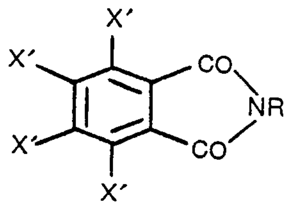

(IV)

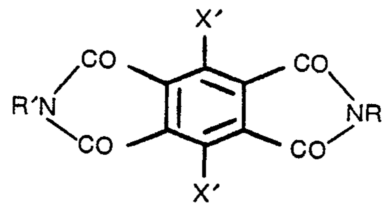

(V)

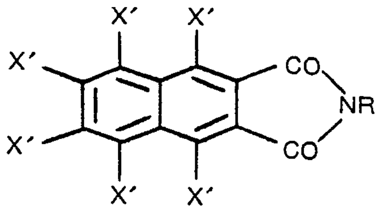

(VI)

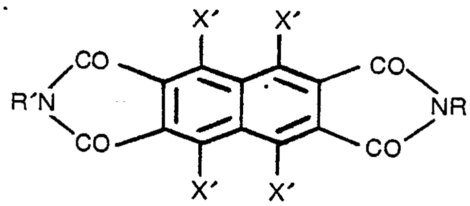

(VII)

dans lesquelle *R* et *R'*, identiques ou différents l'un de l'autre, sont des radicaux alkyle, aryle ou cycloalkyle, et *X'* est choisi parmi les atomes d'hydrogène, de fluor, de chlore et de brome.

5. Composition conforme à la revendication 1, dans laquelle le composant (B) est une sulfone aromatique monomère ou polymère, ou un dérivé d'une telle sulfone, ou un mélange de telles sulfones, dans laquelle le groupe $—SO_2—$ est lié d'un côte à un radical aromatique et de l'autre côté à au moins un autre radical aliphatique, aromatique, cycloaliphatique ou hétérocyclique, éventuellement substitué, les substituants étant des atomes d'halogène, des groupes éther ou ester, des groupes cétone, des groupes nitrile, des groupes carbonate, des groupes amide, des groupe amine, et des groups imide.

6. Composition conforme à la revendication 1, dans laquelle le composant (A) est présent en une quantité non supérieure à 3 parties en poids pour 100 parties de résine (ppc).

7. Composition conforme à la revendication 6, dans laquelle le composant (A) est présent en une quantité non supérieure à 0,5 ppc.

8. Composition conforme à la revendication 1, dans laquelle le composant (B) est présent en une quantité non supérieure à 3 ppc.

9. Composition conforme à la revendication 8, dans laquelle le composant (B) est présent en une quantité non supérieure à 0,8 ppc.

**Revendications pour l'Etat Contractant AT:**

1. Procédé de préparation d'une composition de polycarbonate auto-extinguible, exempte d'halogène caractérisé par l'étape d'addition, à une base de résine de polycarbonate, de:

(A) au moins un sel de composés organiques carboxyliques ayant la formule générale (I), ou leurs mélanges, ledit sel étant un sel d'un métal apartenant à l'un des groupes IA, IB, IIA ou IIB du Tableau Périodique des éléments, et/ou d'ammonium:

$$(HOOC)_m—(A_1)_{s1}—(X)_i—(A_2)_{s2}—(COOH)_n \qquad (I)$$

dans laquelle: $A_1$ et $A_2$, identiques ou différents, sont des groupes phényle pyridyle, cyclohexyle, ou des groupes aliphatiques;

*m* et *n*, identiques ou différents, sont des nombres entiers compris entre 0 et 5, l'un ou l'autre d'entre eux étant différent de zéro, et les deux valant au moins 1 lorsque $A_1$ et $A_2$ sont des groupes aliphatiques;

$s_1$ et $s_2$, identiques ou différents, sont des nombres entiers compris entre 0 et 5, l'un ou l'autre d'entre eux étant différent de zéro;

*i* vaut 0 ou 1;

*X* étant, lorsque le composé de formule (I) est un sel métallique, un radical divalent ou plurivalent, choisi parmi $-SO_2$, $>(CO)_2N-$, $=N-R-N=$, où R est un radical aliphatique, linéaire ou ramifié,

*X* étant, lorsque le composé de formule (I) est un sel d'ammonium, un radical bivalent ou plurivalent qui peut être $=N-R-N=$, R étant tel que défini ci-dessus, avec

(B) au moins un des composants suivants:

1) un éther organique halogéno-substitue', obtenu par éthérification d'alcools ou phénols monofonctionnels ou polyfonctionnels, totalement ou partiellement halogéno-substitués;

2) un imide éventuellement halogéno-substitué;

3) une sulfone organique éventuellement halogéno-substituée;

4) un adjuvant minéral, choisi parmi les halogénures de métaux alcalins ou alcalino-terreux, les oxydes des métaux des groupes IB, VIB, VIIB, IIIA, IVA, VIII et des lanthanides, le noir de carbone, et les résidus de pyrolyse de l'un quelconque des composés de formule générale (I) ci-dessus.

2. Procédé conforme à la revendication 1, dans lequel le composant (B) est un éther organique halogéno-substitué obtenu par éthérification d'alcools ou phénols monofonctionnels et polyfonctionnels, au moins partiellement substitués, et présentant la formule générale:

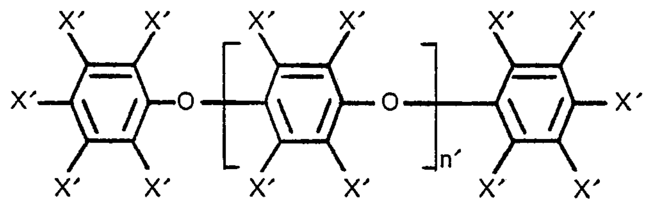

(II)

dans laquelle *n'* est compris entre 0 et $10^4$, et les substituants X' sont choisis parmi des atome d'hydrogène, de fluor, de chlore et de brome, avec la condition qu'au moins un atome d'halogène soit présent dans au moins un noyau aromatique.

3. Procédé conforme à la revendication 1, dans lequel le composant (B) est un éther organique halogéno-substitué obtenu par éthérification d'alcools ou phénols monofonctionnels et polyfonctionnels, au moins partiellement substitués, et présentant la formule générale:

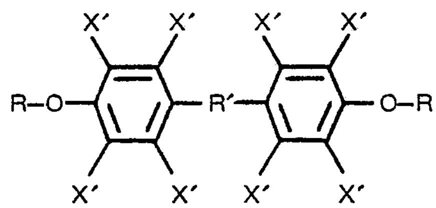

(III)

dans laquelle *X'* a la même signification que celle définie dans la revendication 2, avec la même condition, et *R* et *R'*, identiques ou différents les uns des autres, sont des radicaux alkyle ou cycloalkyle éventuellement halogéno-substitués.

4. Procédé conforme à la revendication 1, dans lequel le composant (B) est un imide éventuellement halogéno-substitué, choisi parmi les imides présentant les formules générales suivantes:

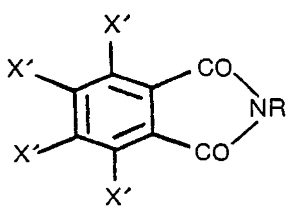

(IV)

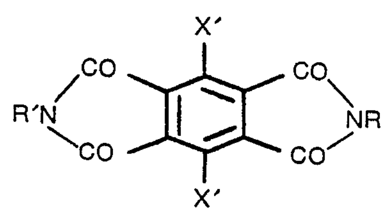

(V)

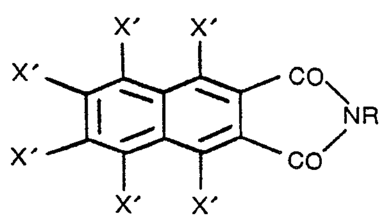

(VI)

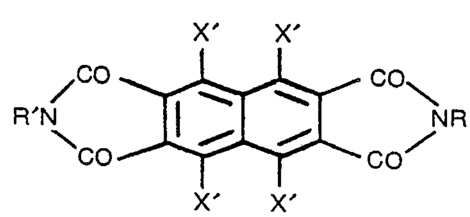

(VII)

dans lesquelle *R* et *R'*, identiques ou différents l'un de l'autre, sont des radicaux alkyle, aryle ou cycloalkyle, et *X'* est choisi parmi les atomes d'hydrogène, de fluor, de chlore et de brome.

5. Procédé conforme à la revendication 1, dans lequel le composant (B) est une sulfone aromatique monomère ou polymère, ou un dérivé d'une telle sulfone, ou un mélange de telles sulfones, dans laquelle le groupe $—SO_2—$ est lié d'un côte à un radical aromatique et de l'autre côté à au moins un autre radical aliphatique, aromatique, cycloaliphatique ou hétérocyclique, éventuellement substitué, les substituants étant des atomes d'halogène, des groupes éther ou ester, des groupes cétone, des groupes nitrile, des groupes carbonate, des groupes amide, des groupes amine, et des groupes imide.

6. Procédé conforme à la revendication 1, dans lequel le composant (A) est présent en une quantité non supérieure à 3 parties en poids pour 100 parties de résine (ppc).

7. Procédé conforme à la revendication 6, dans lequel le composant (A) est présent en une quantité non supérieure à 0,5 ppc.

8. Procédé conforme à la revendication 1, dans lequel le composant (A) est présent en une quantité non supérieure à 3 ppc.

9. Procédé conforme à la revendication 8, dans lequel le composant (B) est présent en une quantité non supérieure à 0,8 ppc.